# EUROPEAN PATENT SPECIFICATION

(11) **EP 2 894 940 B1**
(45) Date of publication and mention of the grant of the patent: **12.10.2016**
(21) Application number: 15150708.4
(22) Date of filing: 09.01.2015
(51) Int. Cl.: H05B 3/06, H01B 7/08

(54) **Busbars**
Sammelschienen
Barres omnibus

(30) Priority: 10.01.2014 GB 201400411
(43) Date of publication of application: 15.07.2015
(73) Proprietor: Strip Tinning Limited, West Midlands B45 0JA (GB)
(72) Inventor: O'Connor, Stephen, Solihull, B91 1LR (GB); Barton, Richard, Rugeley, WS15 1QQ (GB)
(74) Representative: Moore, Christopher Mark

(56) References cited:
- EP-A2- 0 714 754
- EP-A2- 1 102 355
- US-A- 2 964 587
- US-A- 3 345 455
- US-A- 3 576 941
- US-A- 5 408 050
- US-A1- 2005 045 700
- US-A1- 2010 294 566
- US-A1- 2013 105 196

## Description

This invention relates to connectors, specifically, although not exclusively, to thin connectors and to methods of and apparatus for forming a, preferably thin, connector.

Electrical connectors (in this specification "connectors") are used in various ways. One such way is in the supply of electrical energy to the heated windscreen of a motor vehicle.

Heated windscreens typically comprise a glass laminate with resistively heated metal wires provided thereon or therein. Electricity supplied to the wires causes resistive heating which heats the glass and hence melts snow or ice and/or evaporates fog or mist which inhibits driver visibility. Accordingly, it is necessary to supply the metal wires with electricity. One way is to use a connector to supply electricity to a busbar which, in turn distributes the electricity to the metal wires.

Because of the location of the connector it is essential that a connector is able to withstand environmental conditions such as thermal cycling, humidity and chemical use (for example, salt from road traffic spray, de-icer compositions and so on) and the physical requirements of installation and use in the motor vehicle environment. One issue with installation on a motor vehicle is that the connector may have to be bent to adopt a small radius of curvature. Heretofore it has been known for connectors to break when bent around small radii of curvature.

It is also known that there is often a problem with installing connectors, for example because of the tight tolerances to ensure weather proofing of the article on which the connector is installed. It can also be a problem to accurately locate a connector in use.

US2010/0294566 and US2005/0045700 describe heated windscreens which include connectors. US3345455 describes an insulated busbar for conducting electrical energy.

Accordingly, it is an object of the current invention to provide a connector which has a high degree of physical resilience and which is capable of carrying the electrical loads required to heat even the largest of windscreens. It is an additional or alternative object of the invention to provide a connector which can be installed easily and/or located appropriately, preferably whilst not affecting the weatherproofing of the article on or to which it is installed.

A first aspect of the invention provides apparatus for continuously forming connectors, the apparatus comprising means to supply an electrically conductive strip, characterised by means to encase intermittently the conductive strip in non-conductive material, means to apply intermittently an adhesive material covered with a release liner to or along a minor portion of the non-conductive material and across its entire width, means to cut the conductive strip to form connectors and/or means to cut the non-conductive material to form connectors.

In a preferred embodiment the invention provides means to supply plural conductive strips, means to encase intermittently the plural conductive strips in non-conductive material, means to apply intermittently an adhesive material to the non-conductive material, means to cut the conductive strips to form connectors. Said means to apply intermittently an adhesive material may apply intermittently an adhesive material to the non-conductive material transversely of each of the plural conductive strips.

Said means to supply conductive strip may supply continuous conductive strip.

In this specification, 'continuous conductive strip' is a strip which will subsequently require cutting or otherwise separating into plural sections before use.

The apparatus may further comprise means to trim or cut intermittent non-conductive material. In one embodiment said means to cut non-conductive material may comprise means to cut non-conductive material longitudinally, for example to cut non-conductive material between aligned conductive strips. Said means to cut the non-conductive material may cut the adhesive at the same time.

The apparatus may comprise means to supply continuous non-conductive material. Said means for intermittently applying non-conductive material may comprise a separating or cutting means to separate the non-conductive material into discrete lengths.

The apparatus may comprise means to supply continuous adhesive material. Said means for intermittently applying adhesive material may comprise a separating or cutting means to separate the continuous adhesive material into discrete lengths.

A second aspect of the invention provides a connector for installation in a windscreen, the connector comprising a flat strip of electrically conductive material having a first exposed end and a second end for providing electrical contacts, intermediate the first and second ends the conductive material is encased in a thin non-conductive material, characterised in that the connector further comprises an adhesive layer which covers the entire width of the connector and is located at or towards one end of the non-conductive material and extending along a minor portion of an outer surface of the non-conductive material, where the adhesive layer is covered with a release liner.

The flat strip of electrically conductive material preferably has a cross sectional area of less than 3 mm², preferably less than 2.75, less than 2.5, less than 2.25, less than 2, for example less than 1.95, less than 1.9, less than 1.85 or less than 1.8 mm². The flat strip of electrically conductive material preferably has a cross sectional area of between 1.5 and 3mm², say from 1.5 to 2.5 mm², say from 1.5 to 2mm².

In one embodiment the flat strip of electrically conductive material has a thickness of from 80 to 120 x 10⁻⁶m *(i.e.* from 80 to 120 µm), say from 85 to 118, 90 to 115, 95 to 113 µm.

The flat strip of electrically conductive material preferably has a width of from 10 to 30 mm, say from 12 to 28 mm, for example from 14 to 25 mm.

The non-conductive material may have a thickness of from 20 to 60 x 10⁻⁶m (*i.e.* from 20 to 60 µm), say from 25 to 55, 30 to 52, 35 to 51 or 40 to 50 µm. The thickness of the non-conductive material may include the thickness of a cured, partially cured or uncured adhesive layer located between the conductive material and the non-conductive material.

Preferably, the non-conductive material defines a margin layer, either side of the conductive material, thereby to ensure a robust encasement of the conductive material. The margin layer is preferably from 0.25 to 4 mm wide, say from 0.5 to 3 and preferably from 0.75 to 2.5 mm wide.

Preferably, one or both of the free ends of the electrically conductive material extend(s) beyond the ends of the non-conductive material by a distance from 5 to 15 mm.

The adhesive or adhesive material may be provided as an adhesive bonding tape, preferably the peel adhesion strength of the adhesive to glass is in excess of 9 N/10mm adhesive (as measured by ASTM D-3330, 180° peel at room temperature, 72h dwell), preferably in excess of 10 N/10mm adhesive, more preferably in excess of 11 N/10mm adhesive and most preferably in excess of 12 N/10mm adhesive.

The adhesive or adhesive material may be from 5 to 35 mm long. The adhesive or adhesive material may be from 20 to 30 mm long. In some embodiments the adhesive is from 21 to 29, say 22 to 28, 23 to 27, say 24 to 26 mm long. The adhesive may be located at the end of the non-conductive material. Alternatively, the adhesive may be located away from the end of the non-conductive material, say from 0.1 to 20 mm away from the end, say from 0.5 to 15 mm away from the end, say from 1 to 10 mm away from the end of the non-conductive material.

The adhesive or adhesive material may comprise a substrate which bears adhesive on each of its major surfaces. The adhesive is preferably a pressure-sensitive adhesive. For example an acrylic pressure sensitive adhesive. The adhesive or adhesive material is preferably from 0.15 to 0.5 mm thick, say from 0.2 to 0.4mm thick.

Alternatively, the adhesive may be printed, laminated or otherwise applied (e.g. by doctor blade, brushed, sprayed, painted).

A further aspect of the invention provides a method of continuously forming electrical connectors, the method comprising intermittently encasing electrically conductive strips with non-conductive material and applying intermittently adhesive covered with a release liner to a minor portion of a surface of the non-conductive material and cutting the conductive material and/or the non-conductive material to form connectors.

The connector of the invention is both environmentally resistant (physically and chemically) and able to carry the electrical loads necessary to deliver electricity to heat the largest of windscreens. The apparatus and method are deployable to continuously provide connectors at a high production rate, whilst ensuring scrap and reject rates are exceptionally low. Moreover, the apparatus is scalable to increase or decrease production simply and efficiently.

In order that the invention may be more fully understood it will now be described, by way of example only, with reference to the accompanying drawings, in which:
Figure 1A is a plan view of a connector according to the invention;
Figure 1 B is side elevation view of the connector of Figure 1A;
Figure 2 is a plan view of a connector according to the invention;
Figure 3 is a schematic representation of apparatus of the invention;
Figures 4 to 12 are various views of parts of the apparatus according to the invention; and
Figure 13 is a schematic representation of a jig used to test a connector of the invention.

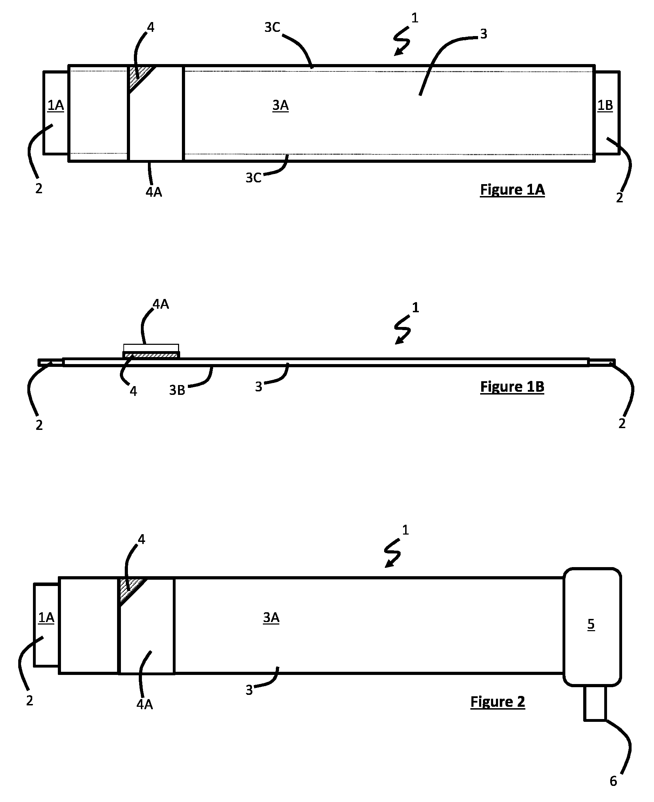

Referring to Figures 1A and 1B, there is shown a connector 1 having a first end 1A and a second end 1 B. The connector 1 comprises a length of flat conductive material 2 which is partially encased in a non-conductive material 3. Located towards the first end 1A and provided on a first surface 3A of the non-conductive material 3 is an adhesive patch 4. Conveniently the adhesive patch 4 is covered by a release liner 4A. The release liner 4A can be used as a guide when installing the connector 1, providing a visual indication of the location depth on a pane of glass for subsequent lamination.

In a preferred embodiment the connector 1 is formed from a flat conductive material 2 which is 15 to 20mm, e.g. 17 mm, wide and about 100 microns (10⁻⁴m) thick, and is preferably formed from copper, which conductive material (e.g. copper) may or may not be coated. If the conductive material 2 is coated, it may be coated with a protective substance, for example a substance capable of imparting at least a degree of environmental protection. One such coating material is tin or an alloy thereof. The non-conductive material 3 is preferably from 20 to 30mm, *e.g.* 23 mm, wide and from 40 to 50 microns, *e.g.* 45 microns, thick at each surface 3A, 3B. The non-conductive material is preferably formed from a temperature-stable plastics material. One such plastics material is polyimide. The non-conductive material 3 may conveniently be formed from Kapton® film supplied by Dupont®. Accordingly, the non-conductive material 3 encases the conductive material 2 and provides an outboard longitudinal margin 3C along each edge of the connector 1. The margin 3C may be from 0.1 to 7.5 mm wide and, to ensure physically robustness is typically about 2mm. The end of the adhesive patch 4 may be located about 3mm from the end of the non-conductive material 3. This, together with the release liner 4A helps to ensure accurate location of the connector 1 onto a busbar or other conductive member.

The exposed ends of the conductive material 2 may be about 9 mm long, say from 2 to 20 mm long.

Referring to Figure 2 there is a shown a connector 1 of Figure 1 which has been further processed. As shown, a conductive terminal 6 has been secured, for example spot welded, to the second end 1B of the connector 1 across the exposed part of the flat conductive material 2. To further secure the terminal 6 and to protect the end 1 B of the connector 1, the end has been over-moulded with a non-conductive (preferably plastics) material 5. In this way the end 1A is conductively connected to the terminal 6, which may, in turn, be connected to a source of electrical energy. The over-moulding operation is preferably completed by injection moulding.

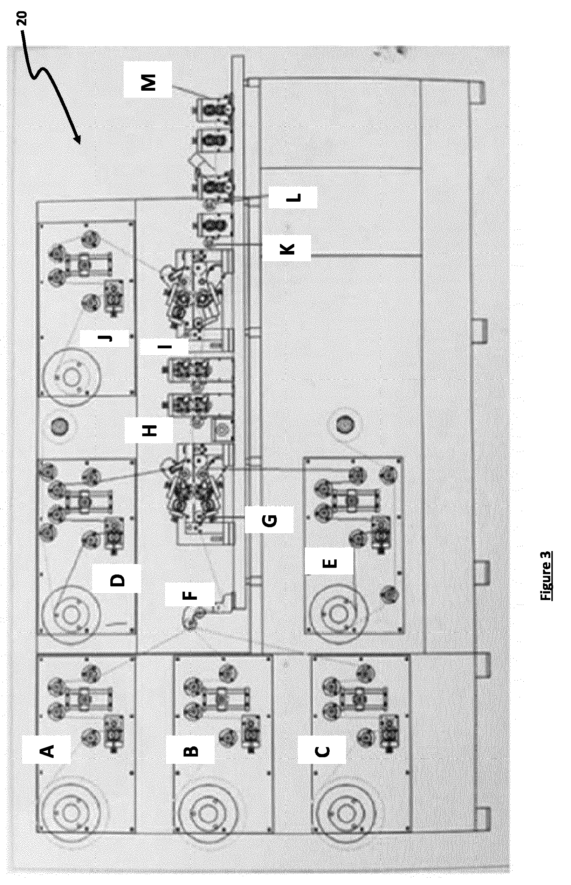

Referring to Figure 3, there is shown apparatus 20 for manufacturing connectors 1 according to the invention. In brief, the apparatus 20 comprises plural stations A, B, C for delivering conductive material 2, plural stations D, E for delivering non-conductive material 3, an assembly module G, roller module H, adhesive strip application module I, adhesive strip supply module J, securing module K, slitting module L and cutting module M, the components of which will be described in detail below.

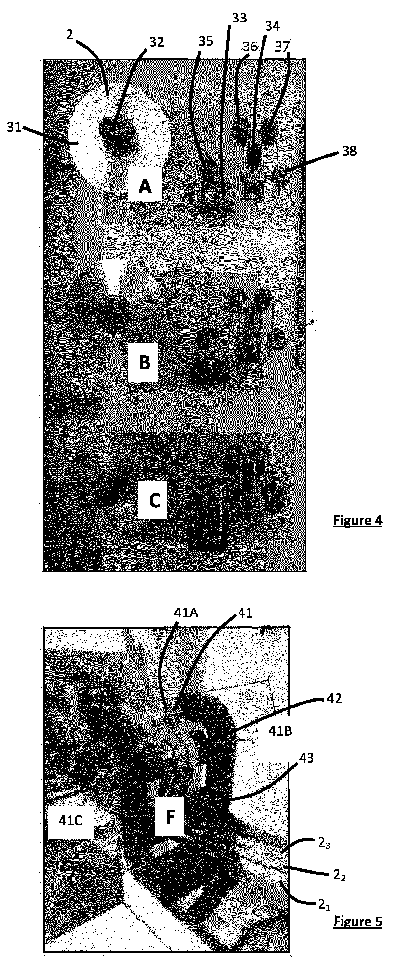

Referring to Figure 4, there is shown a representation of the conductive material supply stations A, B, C. As each are substantially the same only the first, station A, will be described.

Station A comprises a reel 31 of conductive material 2 located on a driven spindle 32. The conductive material 2 is directed through a series of dancers or tensioners 33, 34 and rollers 35, 36, 37, which serve to deliver conductive material 2 and, in so doing, to decoil and flatten the conductive material 2 to ensure that at least most of any residual tendency to recoil is reduced. As shown, the conductive material 2 is directed downwardly from the reel 31 to travel over a first roller 35 and through a first tensioner 33 which comprises a pair of rollers 33A, 33B, the conductive material running through the nip between the rollers 33A, 33B. The first tensioner 33 is set at an appropriate vertical and horizontal distance from the roller 3 to ensure a smooth and constant delivery of conductive material 2. The conductive material 2 then travels upwardly over a second roller 36, downwardly through a second tensioner 34, again comprising a pair of matched rollers 34A, 34B between which the conductive material 2 runs, from where the conductive material 2 runs upwardly over a third roller 37 and downwardly across an exit roller 38 whereupon the conductive material 2 has lost at least some, most or all of any tendency to form itself into a coil. The second tensioner 34 is vertically movable to ensure and maintain tension in the conductive material 2. The position of the tensioner 34 automatically adjusts to compensate for any changes in the delivery rate of conductive material 2 driven from the reel 31 by the spindle 32, or drawn from the downstream components of the apparatus 20.

As shown in Figure 5, the plural strips (2₁, 2₂, 2₃) of conductive material 2 from each of the supply stations A, B, C are directed towards an aligning module F comprising a notched or rebated shaft 41. Each notch provides one of plural channels 41A, B, C, and each channel 41A, B, C corresponds to, and provides a running path for, one of the plural strips of conductive material 2. As shown, the conductive strip from station A extends under the shaft 41 along channel 41A and the conductive material 2 from each of stations B and C extend and runs over the shaft 41 along channels 41B and 41 C respectively. The shaft 41 is preferably formed of a metal material and is not rotatable. Alternatively, the shaft may be subdivided and each portion may be freely rotatable to allow the portions to rotate as the conductive material 2 runs under and/or over the shaft 41. After running under and/or over the shaft 41 the conductive material 2 runs over second aligning shaft 42 and third aligning shaft 43 to exit the aligning station F as plural vertically and horizontally aligned strips running in a substantially horizontal direction in the direction of the assembly module G.

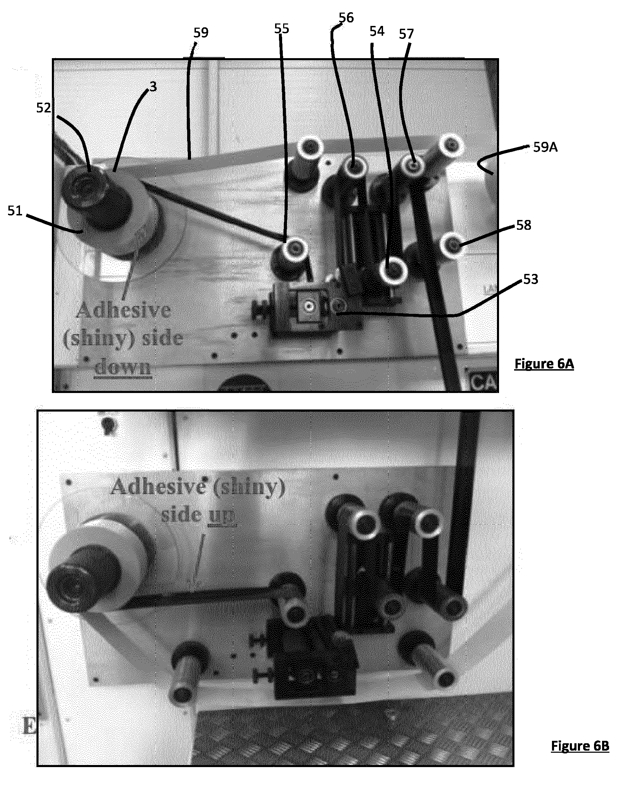

Referring now to Figures 6A and 6B, there is shown a representation of the non-conductive material supply stations D, E. As each are substantially the same, only the first, station D, will be described.

Station D comprises a reel 51 of non-conductive material 3 located on a driven spindle 52. The non-conductive material 3 is directed through a series of tensioners 53, 54 and rollers 55, 56, 57, which serve to deliver non-conductive material 3 and, in so doing, to decoil and tension the non-conductive material 3 to ensure that at least most of any residual tendency to recoil or curl is reduced. As shown, the non-conductive material 3 is directed downwardly from the reel 51 to travel over a first roller 55 and through a first tensioner 53 which comprises a pair of rollers 53A, 33B, the non-conductive material 3 running through the nip between the rollers 53A, 53B. The first tensioner 53 is set at an appropriate vertical and horizontal distance from the roller 55 to ensure a smooth and constant delivery of non-conductive material 3. The non-conductive material 3 then travels upwardly over a second roller 56, downwardly through a second tensioner 54, again comprising a pair of matched rollers 54A, 54B between which the non-conductive material 3 runs, from where the non-conductive material 3 runs upwardly over a third roller 57 and downwardly across an exit roller 58 whereupon the non-conductive material 3 has lost at least some, most or all of any tendency to curl or coil. The second tensioner 54 is vertically movable to ensure and maintain tension in the non-conductive material 3. The position of the tensioner 54 automatically adjusts to compensate for any changes in the delivery rate of non-conductive material 3 driven from the reel 51 by the spindle 52, or drawn from the downstream components of the apparatus 20.

The reel 51 of non-conductive material 3 comprises a length of non-conductive material 3 which has an adhesive, preferably a heat-activated adhesive, applied to one side thereof. In the Figure 6A the adhesive is on the lowermost surface (immediately as the length is removed from the reel 51) of the non-conductive material 3. In the Figure 6B the adhesive is on the uppermost surface of the non-conductive material 3. The adhesive is protected by a release liner 59 which is drawn onto a roll 59A as the non-conductive material 3 is dispensed from the reel 51.

The lengths of non-conductive material 3 exit the supply stations D, E in substantially vertical fashion in the direction of the assembly module G.

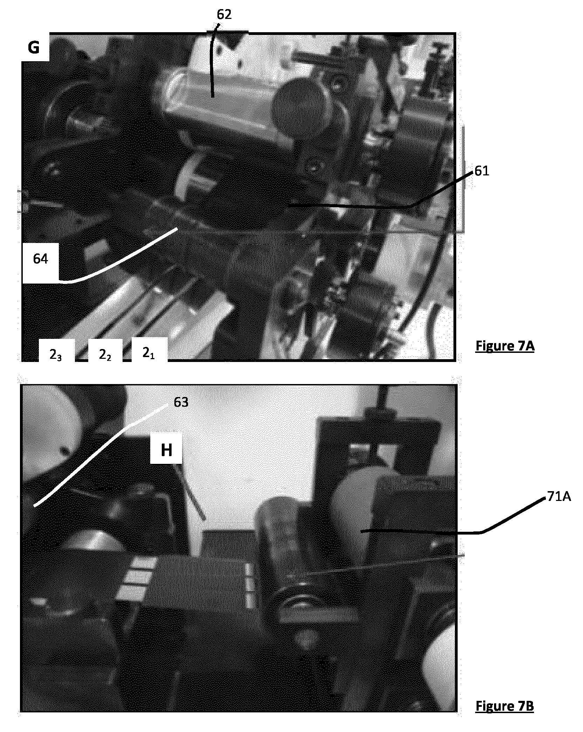

Figures 7A and 7B show an upstream (Figure 7A) and downstream (Figure 7B) view of the conductive material 2 as it runs through the assembly module G.

The non-conductive material 3 enters the assembly module G whereupon the free end is of each length (only the upper portion is shown) is drawn and retained onto a delivery roll 61. The non-conductive material 3 may be held on the deliver roll through the application of a vacuum or reduced pressure. As the delivery roll 61 rotates a corresponding guillotine 62 rotates to bring a blade member (not shown) into cutting relations with the non-conductive material 3, thereby severing a length of non-conductive material 3 from the continuous length. Further rotation of the delivery roll 61 causes the retained, severed length of non-conductive material 3 to travel under the roll 61 (or over the roll for the lowermost delivered non-conductive material 3) and be brought into abutment with the uppermost (or lowermost) surface of the aligned lengths (2₁, 2₂, 2₃) of conductive material 2. The adhesive-bearing surface of the non-conductive material 3 is lowermost (or uppermost for the lower length of non-conductive material 3) thereby bringing the adhesive into contact with the aligned lengths (2₁, 2₂, 2₃) of conductive material 2.

The aligned lengths (2₁, 2₂, 2₃) of conductive material 2 are delivered via a, preferably notched, aligning roller 64. Continued passage of the aligned lengths (2₁, 2₂, 2₃) of conductive material 2 through the assembly module G causes a portion of each of the lengths of conductive material 2 to be brought into contact with a leading edge of upper and lower lengths of non-conductive material 3. Because the non-conductive material 3 is wider than the width defined by the plural lengths of conductive material 2 the lengths of non-conductive material 3 extend transversely beyond each of the longitudinal edges of the lengths of conductive material 2. In this fashion the adhesive-bearing face of the upper non-conductive material 3 contacts the adhesive bearing face of the lower non-conductive material 3 at plural (e.g. four as shown) positions across the width of the part. The adhesive bearing surfaces of the upper and lower lengths of non-conductive material 3 also contact the facing parts of the lengths of conductive material 2.

Once an appropriate length of the non-conductive material 3 is dispensed it is cut by the rotating guillotine 62 to generate a trailing edge which is subsequently brought into contact with the lengths of conductive material 2. A small portion of conductive material 2 then runs on through the module G and the process repeated with a further leading edge of upper and lower non-conductive material 3. In this way, and as shown in Figure 7B, a continuous length 10 of joined lengths of conductive material intermittently encased in discrete lengths of non-conductive material 3 is formed.

Immediately downstream of the point at which the conductive material 2 has the non-conductive material applied to the upper and lower surfaces thereof, is a pair of matched, heated rollers 63. The rollers 63 are heated to a temperature whereby passage of the non-conductive material between the nip thereof causes the adhesive to start to cure, thereby increasing the tack between the facing portions of upper and lower non-conductive material 3 and between facing portions of upper non-conductive material 3 and upper surface of the aligned lengths (2₁, 2₂, 2₃) of conductive material 2 and between facing portions of lower non-conductive material 3 and lower surface of the aligned lengths (2₁, 2₂, 2₃) of conductive material 2.

The continuous length is then directed through roller module H (seen in Figure 7B) which comprises a pair of heated rollers 71A,B (only the upper roller 71A is shown). The pair of rollers 71A,B is heated to an elevated temperature as compared to the preceding pair 63. In one embodiment the rollers 63, and 71A,B, are heated respectively to temperatures in the ranges of 60 to 80°C and 165 to 185°C, preferably 65 to 75 and 170 to 180°C.

The rollers 71A,B, heat the continuous length 10 on both sides to activate or further activate the adhesive and thereby more rigorously secure the upper and lower lengths of non-conductive material 3 to the upper and lower surfaces of the aligned lengths (2₁, 2₂, 2₃) of conductive material 2 and the upper and lower surfaces of the non-conductive material 3 to each other at the positions in between and outboard the lengths of conductive material 2 where the adhesive-bearing surfaces of the non-conductive material 3 lie adjacent one another. Thus, from the roller station H emerges a bonded continuous length 10A.

In a preferred embodiment, the adhesive will be fully cured only once the connector 1 has been secured in place on the site of use (e.g. a windscreen) and heated for an extended period of time (e.g. for 1 hour at 120°C). In the above described embodiment, and using a thermosetting epoxy adhesive, we achieve a partial cure at the exit of roller module H. The partial cure imparts the connectors 1 with sufficient robustness that they can be handled and further processed (as will be explained below). Accordingly, the bonded continuous length 10A is not fully cured when it emerges from the roller station but the adhesive will achieve full cure at a downstream location.

The bonded continuous length 10A is then conveyed to the strip application module I.

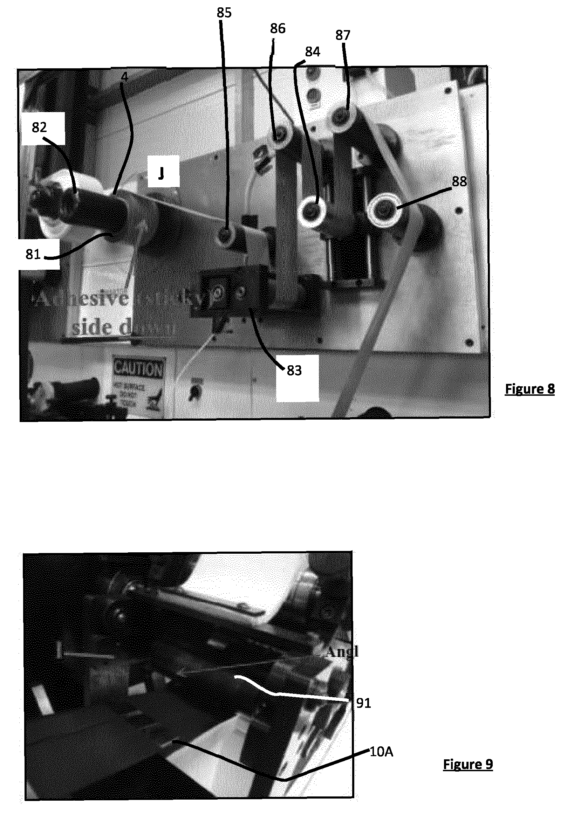

Referring to Figure 8 there is shown the strip supply module J.

Strip supply module J provides a reel 81 of adhesive patch material 4 located on a driven spindle 82. The adhesive patch material 4 is directed through a series of tensioners 83, 84 and rollers 85, 86, 87, which serve to deliver the adhesive patch material 4 and, in so doing, decoil and tension the adhesive patch material 4 to ensure that at least most of any residual tendency to recoil or curl is reduced. As shown, the adhesive patch material 4 is delivered downwardly from the reel 81 to travel over a first roller 85 and through a first tensioner 83 which comprises a pair of rollers 83A, 83B, the adhesive patch material 4 running through the nip between the rollers 83A, 83B. The first tensioner 83 is set at an appropriate vertical and horizontal distance from the roller 85 to ensure a smooth and constant delivery of adhesive patch material 4.The adhesive patch material 4 then travels upwardly over a second roller 86, downwardly through a second tensioner 84, from where the adhesive patch material 4 runs upwardly over a third roller 87 and downwardly across an exit roller 88 whereupon the adhesive patch material 4 has lost at least some, most or all of any tendency to curl or coil. The second tensioner 84 is vertically movable to ensure and maintain tension in the adhesive patch material 4. The position of the tensioner 84 automatically adjusts to compensate for any changes in the delivery rate of adhesive material 4 driven from the reel 81 by the spindle 82, or drawn from the downstream components of the apparatus 20.

The continuous length of adhesive patch material 4 comprises a continuous length of substrate 4B, bearing adhesive on each major surface, the upper most surface (as shown) of the adhesive patch material 4 carrying a release liner 4A.

The continuous length of adhesive patch material 4 is conveyed to the strip application module I.

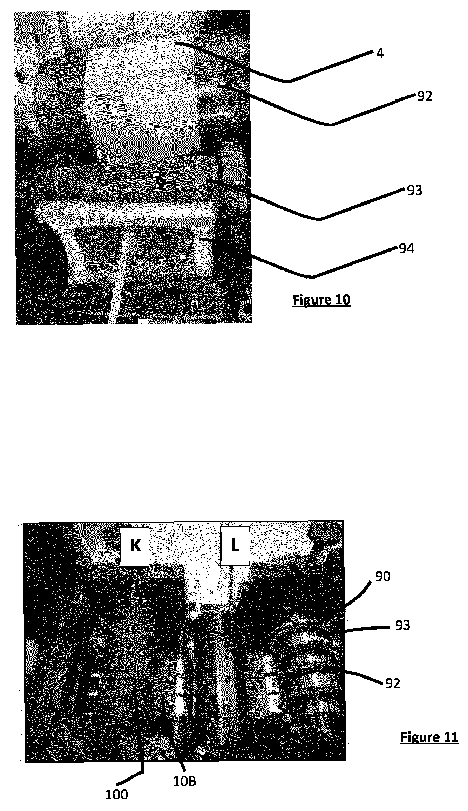

Referring now to Figure 9 and 10, a length of adhesive patch material 4 is secured to the bonded continuous length 10A at the strip application module I. The continuous length 10A is passed through the nip of tensioning rollers 91 (only the upper roller is shown) whereupon a portion of the continuous length 10A is brought into contact with a lowermost surface (as shown) of the leading edge of a severed length of adhesive patch material 4. The adhesive patch material 4 is of the same width as the continuous length 10A. In this fashion the adhesive-bearing (lower most) surface of the adhesive patch material 4 contacts the continuous length 10A across its entire width.

A leading edge of adhesive patch material 4 is dispensed and retained (adhesive side uppermost as shown) on a roll 92. The adhesive patch material 4 may be retained on the roll 92 by application of a vacuum or low pressure. As the roll 92 rotates the patch material 4 a corresponding guillotine 93 rotates to bring a blade member (not shown) into cutting relations with the adhesive patch material 4, thereby severing a length of adhesive patch material 4 from the continuous length, thereby to generate a trailing edge which is subsequently brought into contact with the continuous lengths 10A. A portion of the continuous length 10A then runs on through the station I and the process is repeated with a further leading edge of adhesive patch material 4. In this way, the continuous length 10A intermittently bears a length of adhesive patch material 4 to form a continuous patch length 10B. Typically the longitudinal length of the adhesive patch material 4 is about 25 mm.

The guillotine 93 is continuously cleaned of any adhesive transferred thereto from the adhesive patch material 4 by a solvent-soaked felt pad 94 which is continuously supplied with solvent.

As shown in Figure 11, the continuous patch length 10B is conveyed through the securing module K whereupon the continuous patch length 10B is passed through the nip of matched rollers 100 to ensure firm adhesion of the length of patch material 4 thereto.

The continuous patch length 10B is then conveyed to the slitting module L, which is shown in Figure 11.

The slitting module L comprises a series of blade members 90 and one or more anvil members 91. The continuous patch length 10B passes between the blade members 90 and one or more anvil members to separate the continuous patch length 10B into plural continuous strip lengths 10C. To do so, each blade member 90 cuts the continuous patch length 10B longitudinally at a position intermediate and between continuous lengths of conductive material 2. Thus, for every n lengths of conductive material 2 there will be *n-1* blade members 90 and this will form n continuous strip lengths 10C. Thus, as shown there are 3 lengths of conductive material 2, requiring 2 blade members 90 to form 3 continuous strip lengths 10C. Because the adhesive firmly secures the upper and lower lengths of non-conductive material 3 together the slitting operation does not lead to delamination of the upper and lower layers of non-conductive material 3. Moreover, the slitting operation by blade members 90 and anvil members 91 causes the length of adhesive patch material 4 to be cut to the exact width of each continuous strip length 10C. In a preferred embodiment, the blade members 90 are circular blades 92 mounted on a rotating spindle 93. The anvil member(s) 91 may be formed from a hard plastics roller, for example a roller fabricated or coated in a hard plastics material or metal.

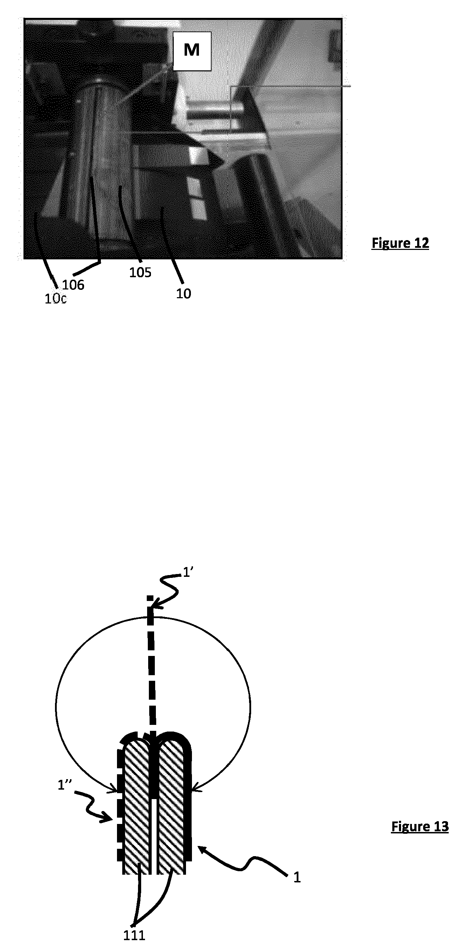

The aligned plural continuous strip lengths 10C are conveyed to the cutting module M, as shown in Figure 12. At the cutting module M the aligned plural continuous strip lengths 10C are brought between a rotatable guillotine 105 bearing one or more cutting blade members 106 and cutting anvil members (not shown) which cut the continuous strip lengths transversely to provide plural connectors 1 as shown in Figure 1A and 1B. To do so, the or each cutting blade member 105 acts on the exposed conductive material 2 intermediate lengths of non-conductive material 3, thereby to separate the continuous strip length 10C into plural connectors 1.

The so-formed connectors 1 can then have a terminal connector 6 spot welded or otherwise secured to an end of the connector 1 and the terminal connector 6 can be over-moulded or otherwise encased in a non-conductive material 5, to leave a portion of the terminal connector 6 exposed to facilitate electrical connection.

In use, the thin connector 1 can be used to supply electricity delivered to the connector 1 via the terminal connector 6 and along the conductive material 2 to the exposed end 1A of the connector 1.

In one embodiment the connector 1 can be used to supply electricity in a motor vehicle, for example to a heated windscreen of a motor vehicle.

To secure the connector 1 in place the release line 4A can be removed from the adhesive patch 4 to expose a layer of contact adhesive. The patch can be pressed on to a surface to secure the connector 1 in place.

Because the connector 1 is thin and robust it can be bent at a position intermediate its two ends 1A, 1 B. The high degree of bending resilience (*i.e.* repeated bending without breaking) will determine the radii of curvature through which the connector 1 can be installed and secured in use without damage.

We tested our connectors 1 as per the following tests:
**Test 1 - Physical**
   A rig was set **up** as shown in Figure 13, comprising a pair of clamped metal plates 111, between which an end of a connector 1 is held. The metal plates are 2.0 mm thick. A connector 1 was repeatedly bent from a start position (as at connector 1) through substantially an entire 360°, that is through the position indicated at 1' and to the position indicated at 1", and then in reverse (*i.e.* from 1" to 1' to 1).
   ***Result:*** The connector 1 was able to withstand at least 10 bending cycles before any damage was visible.
**Test 2 - Environmental**
   A set of connectors 1 were folded over and placed in a temperature controlled oven for 5 hours at 140°C.
   ***Result:*** No visual delamination or damage occurred and the electrical performance of the connector 1 was not impaired.
**Test 3 - Environmental**
   A set of bent connectors 1 (for example in the configuration shown at 1" in Figure 13) were placed vertically, bent end lowermost, in a heat proof vessel. The vessel was charged with a 10 w/w% NaCl solution to a depth of 15 mm, thereby covering the bent portion of the connector 1 and extending along the length of the connector 1. The vessel was then sealed and placed in a temperature controlled oven at 95°C for 30 hours. The connectors 1 were removed and tested.
   ***Result:*** No visible delamination occurred and the electrical performance of the connector 1 was not affected.
**Test 4 - Insulation Resistance**
   A set of connectors 1 which had undergone each of Tests 1, 2 and 3 as well as connectors 1 which had undergone Tests 1 and 3, 2 and 3 and 1, 2 and 3 were tested for their insulative properties.
   Connectors 1 were bent in two and located vertically (bent end lowermost) in a vessel which had been charged with a 5 w/w% NaCl solution. An electrical current was applied to the solution (100V DC) to determine the efficacy of the insulation afforded by the non-conductive material 3.
   ***Result:*** In no case did any current flow, indicating that all of the connectors 1 remained insulated and the integrity of the insulation was not compromised even after exposure to the above-identified Tests.

The above Tests demonstrate that connectors 1 of the invention are both physically and environmentally robust.

In order to determine how strong the connectors 1 adhered to glass the following Test was performed:
**Test 5 - Adhesion**
   A connector 1 was located in a desired location on a substrate using the release liner 4A as a guide. The release liner 4A from an adhesive patch 4 of the connector 1 was then removed and a flat piece of glass was pushed firmly onto the adhesive patch 4. The pressure was maintained for 10 minutes. The connector 1 was then left for 30 minutes. The amount of force required to remove the connector 1 from the glass was measured.
   ***Result:*** The amount of force required was in excess of 66N (average of three attempts) clearly demonstrating that even after a short period of time the connector 1 of the invention was robustly adhered to a glass substrate.

The above Tests demonstrate the suitability of the connectors 1 of the invention for use in difficult environments and for use in challenging locations where connectors 1 need to be thin, for example to extend between, through or across otherwise waterproofed or sealed areas, and/or carry significant electrical current (for example when a large load is required for a large windscreen) and/or which can be securely sited at a point of use without fear of the connector 1 becoming dislodged.

Whilst the above description discloses non-conductive material provided from a roll it need not be to fall within the scope of the invention. For example, lengths of material can be provided which is pre-cut or the non-conductive material can be folded or otherwise stacked or concertinaed. Moreover, the non-conductive material need not bear adhesive. Adhesive can be applied to the non-conductive material in line (e.g. once it has been removed for use) or adhesive can be applied to the conductive strip, interjected as one or more separate layers (for example longitudinal lengths) or applied to one or other or both of the major facing surfaces of the non-conductive material 3 before or once a layer has come into proximity with the conductive strip.

Whilst the above description discloses that adhesive material is dispensed from a roll it need not be to fall within the scope of the invention. For example, lengths of adhesive can be provided which is pre-cut or the adhesive material can be folded or otherwise stacked or concertinaed. The adhesive can be applied as a to-be-cured adhesive via a doctor blade. The adhesive may be applied in plural parts, for example a two part contact adhesive.

We state above that the continuous lengths are slit and then cut to form connectors 1. The order may be reversed or all of the cutting operating may be conducted simultaneously for example using a stamping operation.

Different adhesives to the ones mentioned above may be employed. Different non-conductive materials may be used, providing they are capable of withstanding bending loads and are environmentally (temperature, moisture, chemical) resistant.

The above description mentions copper as a suitable conductive material. Other conductive materials may be used, such as gold, silver and other less precious metals.

## Claims

1. An apparatus (20) for continuously forming connectors (1), the apparatus (20) comprising means to supply (A, B, C) an electrically conductive strip (2), **characterised by** means to encase intermittently (G, H) the conductive strip (2) in non-conductive material (3), means to apply intermittently (I, K) an adhesive material (4) covered with a release liner (4A) to or along a minor portion of the non-conductive material (3) and across its entire width, means to cut (M) the conductive strip (2) to form connectors (1) and/or means to cut (G, L) the non-conductive material (3) to form connectors (1).

2. Apparatus (20) according to Claim 1, wherein the apparatus (20) comprises means to cut (M) the conductive strip (2) and said means (M) are arranged to cut in a region in which conductive strip (2) is not encased in non-conductive material (3).

3. Apparatus (20) according to Claim 1 or 2, wherein the apparatus (20) comprises means to cut (G, L) the non-conductive material (3) and said means (G, L) are arranged to cut only through the non-conductive material (3).

4. Apparatus (20) according to any of Claims 1 to 3, comprising means to supply (A, B, C) plural conductive strips (2₁, 2₂, 2₃).

5. Apparatus (20) according to Claim 4, comprising means to encase intermittently (G, H) the plural conductive strips (2₁, 2₂, 2₃) in non-conductive material (3).

6. Apparatus (20) according to Claim 4 or 5, comprising means to apply intermittently (I, K) an adhesive material (4) to the non-conductive material (3) transversely of each of the plural conductive strips (2₁, 2₂, 2₃).

7. Apparatus (20) according to any of Claims 4, 5 or 6, wherein said means to cut (L) the non-conductive material (3) cuts between the plural conductive strips (2₁, 2₂, 2₃) and wherein said means to cut (L) the non-conductive material (3) preferably cuts the adhesive (4) as it cuts between the plural conductive strips (2₁, 2₂, 2₃).

8. Apparatus (20) according to any preceding Claim, wherein said means for intermittently applying (G, H) non-conductive material (3) comprises separating or cutting means (62) to separate the non-conductive material (3) into discrete lengths.

9. Apparatus (20) according to any preceding Claim, wherein said means for intermittently applying (I, K) adhesive material (4) comprises separating or cutting means (93) to separate the continuous adhesive material (4) into discrete lengths.

10. A method of continuously forming connectors using the apparatus of claim 1, the method comprising intermittently
encasing electrically conductive strips with non-conductive material and applying intermittently adhesive covered with a release liner to a minor portion of a surface of the non-conductive material and cutting the conductive material and/or the non-conductive material to form connectors.

11. A connector (1) for installation in a windscreen, the connector (1) comprising a flat strip of electrically conductive material (2) having a first exposed end (1A) and a second end (1B) for providing electrical contacts, intermediate the first (1A) and second ends (1B) the conductive material (2) is encased in a thin non-conductive material (3), **characterised in that** the connector (1) further comprises an adhesive layer (4) which covers the entire width of the connector (1) and is located at or towards one end of the non-conductive material (3) and extending along a minor portion of an outer surface of the non-conductive material (3), where the adhesive layer (4) is covered with a release liner (4A).

12. A connector (1)according to Claim 11, wherein the flat strip of electrically conductive material (2) has a cross sectional area of less than 3 mm², preferably less than 2.75, less than 2.5, less than 2.25, less than 2, for example less than 1.95, less than 1.9, less than 1.85 or less than 1.8 mm² and/or has a cross sectional area of between 1.5 and 3mm², say from 1.5 to 2.5 mm², say from 1.5 to 2mm² and/or wherein the flat strip of electrically conductive material (2) may have a thickness of from 80 to 120 x 10⁻⁶m (*i.e.* from 80 to 120 µm), say from 85 to 118, 90 to 115, 95 to 113 µm and/or wherein the flat strip of electrically conductive material (2) may have a width of from 10 to 30 mm, say from 12 to 28 mm, for example from 14 to 25 mm.

13. A connector (1) according to any of Claims 11 or 12, wherein the non-conductive material (3) defines a margin layer (3C), either side of the conductive material (2), thereby to ensure a robust encasement of the conductive material (2) and wherein the margin layer (3C) may be from 0.25 to 4 mm wide, say from 0.5 to 3 and preferably from 0.75 to 2.5 mm wide.

14. A connector (1) according to any of Claims 11 to 13, wherein the adhesive (4) is from 5 to 35 mm long, say from 20 to 30 mm long, for example from 21 to 29, say 22 to 28, 23 to 27, say 24 to 26 mm long.

15. A connector (1) according to any of Claims 11 to 14, wherein the adhesive (4) is located away from the end of the non-conductive material (3), say from 0.1 to 20 mm way from the end, say from 0.5 to 15 mm away from the end, say from 1 to 10 mm away from the end of the non-conductive material (3).

## Patentansprüche

1. Vorrichtung (20) zum kontinuierlichen Bilden von Verbindern (1), wobei die Vorrichtung (20) Mittel zum Bereitstellen (A, B, C) eines elektrisch leitenden Streifens (2) umfasst, **gekennzeichnet durch** Mittel zum intermittierenden Ummanteln (G, H) des leitenden Streifens (2) mit nichtleitendem Material (3), Mittel zum intermittierenden Aufbringen (I, K) eines mit einer Trennschicht (4A) bedeckten Klebematerials (4) auf oder entlang eines kleinen Teils des nichtleitenden Materials (3) und über seine gesamte Breite, Mittel zum Schneiden (M) des leitenden Streifens (2), um Verbinder (1) zu bilden, und/oder Mittel zum Schneiden (G, L) des nichtleitenden Materials (3), um Verbinder zu bilden (1).

2. Vorrichtung (20) nach Anspruch 1, wobei die Vorrichtung (20) Mittel zum Schneiden (M) des leitenden Streifens (2) umfasst und die Mittel (M) angeordnet sind, um in einem Bereich zu schneiden, in dem der leitende Streifen (2) nicht mit nichtleitendem Material (3) ummantelt ist.

3. Vorrichtung (20) nach Anspruch 1 oder 2, wobei die Vorrichtung (20) Mittel zum Schneiden (G, L) des nichtleitenden Materials (3) umfasst und die Mittel (G, L) angeordnet sind, um nur durch das nichtleitende Material (3) zu schneiden.

4. Vorrichtung (20) nach einem der Ansprüche 1 bis 3, umfassend Mittel zum Bereitstellen (A, B, C) mehrerer leitender Streifen (2₁, 2₂, 2₃).

5. Vorrichtung (20) nach Anspruch 4, umfassend Mittel zum intermittierenden Ummanteln (G, H) der mehreren leitenden Streifen (2₁, 2₂, 2₃) mit nichtleitendem Material (3).

6. Vorrichtung (20) nach Anspruch 4 oder 5, umfassend Mittel zum intermittierenden Aufbringen (I, K) eines Klebematerials (4) auf das nichtleitende Material (3) quer zu jedem der mehreren leitenden Streifen (2₁, 2₂, 2₃).

7. Vorrichtung (20) nach einem der Ansprüche 4, 5 oder 6, wobei die Mittel zum Schneiden (L) des nichtleitenden Materials (3) zwischen den mehreren leitenden Streifen (2₁, 2₂, 2₃) schneiden und wobei die Mittel zum Schneiden (L) des nichtleitenden Materials (3) vorzugsweise den Klebstoff (4) schneiden, wenn sie zwischen den mehreren leitenden Streifen (2₁, 2₂, 2₃) schneiden.

8. Vorrichtung (20) nach einem der vorhergehenden Ansprüche, wobei die Mittel zum intermittierenden Aufbringen (G, H) des nichtleitenden Materials (3) Trennungs- oder Schneidemittel (62) umfassen, um das nichtleitende Material (3) in bestimmte Längen zu trennen.

9. Vorrichtung (20) nach einem der vorhergehenden Ansprüche, wobei die Mittel zum, intermittierenden Aufbringen (I, K) des Klebematerials (4) Trennungs- oder Schneidemittel (93) umfassen, um das Endlosklebematerial (4) in bestimmte Längen zu trennen.

10. Verfahren zum kontinuierlichen Bilden von Verbindern unter Verwendung der Vorrichtung nach Anspruch 1, wobei das Verfahren Folgendes umfasst: intermittierendes Ummanteln elektrisch leitender Streifen mit nichtleitendem Material und intermittierendes Aufbringen von mit einer Trennschicht bedecktem Klebstoff auf einen kleinen Teil einer Oberfläche des nichtleitenden Materials und Schneiden des leitenden Materials und/oder des nichtleitenden Materials, um Verbinder zu bilden.

11. Verbinder (1) zum Einbau in eine Windschutzscheibe, wobei der Verbinder (1) einen flachen Streifen elektrisch leitenden Materials (2) umfasst, der ein erstes freiliegendes Ende (1A) und ein zweites Ende (1B) zum Bereitstellen elektrischer Kontakte aufweist, wobei das leitende Material (2) zwischen den ersten (1A) und zweiten Enden (1B) mit einem dünnen nichtleitenden Material (3) ummantelt ist, **dadurch gekennzeichnet, dass** der Verbinder (1) ferner eine Klebeschicht (4) umfasst, die die gesamte Breite des Verbinders (1) bedeckt und sich an einem Ende oder in Richtung eines Endes des nichtleitenden Materials (3) befindet und sich entlang eines kleinen Teils einer Außenfläche des nichtleitenden Materials (3) erstreckt, wo die Klebeschicht (4) mit einer Trennschicht bedeckt ist (4A).

12. Verbinder (1) nach Anspruch 11, wobei der flache Streifen des elektrisch leitenden Materials (2) eine Querschnittsfläche von weniger als 3 mm² aufweist, vorzugsweise von weniger als 2,75, weniger als 2,5, weniger als 2,25, weniger als 2, zum Beispiel weniger als 1,95, weniger als 1,9, weniger als 1,85 oder weniger als 1,8 mm² und/oder eine Querschnittsfläche zwischen 1,5 und 3 mm² aufweist, wie etwa zwischen 1,5 und 2,5 mm², wie etwa zwischen 1,5 und 2 mm² und/oder wobei der flache Streifen des elektrisch leitenden Materials (2) eine Dicke von zwischen 80 und 120 x 10⁻⁶ m aufweisen kann *(d. h.* von 80 bis 120 µm), wie etwa von 85 bis 118, 90 bis 115, 95 bis 113 µm und/oder wobei der flache Streifen des elektrisch leitenden Materials (2) eine Breite von zwischen 10 und 30 mm aufweisen kann, wie etwa zwischen 12 und 28 mm, zum Beispiel zwischen 14 und 25 mm.

13. Verbinder (1) nach einem der Ansprüche 11 oder 12, wobei das nichtleitende Material (3) eine Randschicht (3C) auf jeder Seite des leitenden Materials (2) definiert, um dadurch eine robuste Ummantelung des leitenden Materials (2) sicherzustellen und wobei die Randschicht (3C) zwischen 0,25 und 4 mm breit sein kann, wie etwa zwischen 0,5 und 3 und vorzugsweise zwischen 0,75 und 2,5 mm breit.

14. Verbinder (1) nach einem der Ansprüche 11 bis 13, wobei der Klebstoff (4) zwischen 5 und 35 mm lang ist, wie etwa zwischen 20 und 30 mm lang, zum Beispiel zwischen 21 und 29, wie etwa 22 bis 28, 23 bis 27, wie etwa 24 bis 26 mm lang.

15. Verbinder (1) nach einem der Ansprüche 11 bis 14, wobei sich der Klebstoff (4) von dem Ende des nichtleitenden Materials (3) weg befindet, wie etwa zwischen 0,1 und 20 mm von dem Ende weg, wie etwa zwischen 0,5 und 15 mm von dem Ende weg, wie etwa zwischen 1 und 10 mm von dem Ende des nichtleitenden Materials weg (3).

## Revendications

1. Appareil (20) permettant la production de connecteurs (1) en continu, l'appareil (20) comprenant des moyens pour alimenter (A, B, C) une bande électriquement conductrice (2), **caractérisé par** des moyens pour enrober par intermittence (G, H) la bande conductrice (2) dans un matériau non-conducteur (3), des moyens pour appliquer de façon intermittente (I, K) un adhésif (4) recouvert d'une couche détachable (4A) à une, ou bien le long d'une partie mineure du matériau non-conducteur (3) et sur toute sa largeur, des moyens de découpe (M) de la bande conductrice (2) pour former les connecteurs (1) et/ou des moyens de découpe (G, L) du matériau non-conducteur (3) pour former les connecteurs (1).

2. Appareil (20) selon la revendication 1, où l'appareil (20) comprend des moyens de découpe (M) de la bande conductrice (2) et lesdits moyens (M) sont disposés de manière à découper dans une zone dans laquelle la bande conductrice (2) n'est pas enrobée dans le matériau non-conducteur (3).

3. Appareil (20) selon la revendication 1 ou la revendication 2, où l'appareil (20) comprend des moyens de découpe (G, L) du matériau non-conducteur (3) et lesdits moyens (G, L) sont disposés de manière à découper uniquement à travers le matériau non-conducteur (3).

4. Appareil (20) selon l'une quelconque des revendications 1 à 3, comprenant des moyens pour alimenter (A, B, C) les différentes bandes conductrices (2₁, 2₂, 2₃).

5. Appareil (20) selon la revendication 4, comprenant des moyens pour enrober par intermittence (G, H) les différentes bandes conductrices (2₁, 2₂, 2₃) dans un matériau non-conducteur (3).

6. Appareil (20) selon la revendication 4 ou la revendication 5, comportant des moyens pour appliquer par intermittence (I, K) un adhésif (4) au matériau non-conducteur (3) transversalement par rapport aux différentes bandes conductrices (2₁, 2₂, 2₃).

7. Appareil (20) selon l'une quelconque des revendications 4, 5 ou 6, où lesdits moyens de découpe (L) du matériau non-conducteur (3) découpent entre les différentes bandes conductrices (2₁, 2₂, 2₃) et où lesdits moyens de découpe (L) du matériau non-conducteur (3) de préférence découpent l'adhésif (4) en découpant entre les différentes bandes conductrices (2₁, 2₂, 2₃).

8. Appareil (20) selon une quelconque revendication précédente, où lesdits moyens d'application (G, H) par intermittence du matériau non-conducteur (3) comprennent des moyens de séparation ou de découpe (62) pour séparer le matériau non-conducteur (3) en longueurs discrètes.

9. Appareil (20) selon une quelconque revendication précédente, où lesdits moyens d'application (I, K) par intermittence de l'adhésif (4) comprennent des moyens de séparation ou de découpe (93) pour séparer l'adhésif continu (4) en longueurs discrètes.

10. Procédé de production continue de connecteurs à l'aide de l'appareil de la revendication 1, le procédé comprenant l'enrobage par intermittence des bandes conductrices avec un matériau non-conducteur et l'application par intermittence d'un adhésif recouvert d'une couche détachable sur une petite partie d'une surface du matériau non-conducteur et la découpe du matériau conducteur et/ou du matériau non-conducteur pour former les connecteurs.

11. Connecteur (1) pour installation dans un pare-brise, le connecteur (1) comprenant une bande plate de matériau électriquement conducteur (2) présentant une première extrémité exposée (1A) et une deuxième extrémité (1B) pour constituer des contacts électriques, entre la première extrémité (1A) et la deuxième extrémité (1B) le matériau conducteur (2) est enrobé dans un matériau non-conducteur mince (3), **caractérisé en ce que** le connecteur (1) comprend en outre une couche adhésive (4) qui recouvre toute la largeur du connecteur (1) et qui est située dans ou vers une extrémité du matériau non-conducteur (3) et s'étendant le long d'une petite partie d'une surface externe du matériau non-conducteur (3), où la couche adhésive (4) est recouverte d'une couche détachable (4A).

12. Connecteur (1) selon la revendication 11, où la bande plate de matériau électriquement conducteur (2) a une section transversale inférieure 3 mm², de préférence inférieure à 2,75, inférieure à 2,5, inférieure à 2,25, inférieure à 2, par exemple inférieure à 1,95, inférieure à 1,9, inférieure à 1,85 ou inférieure à 1,8 mm² et/ou présente une section transversale comprise entre 1,5 et 3mm², disons de 1,5 à 2,5 mm², disons de 1,5 à 2mm² et/ou où la bande plate de matériau électriquement conducteur (2) peut avoir une épaisseur allant de 80 à 120 x 10⁻⁶m *(c*'*est*-*à*-*dire* de 80 à 120 µm), disons de 85 à 118, de 90 à 115, de 95 à 113 µm et/ou où la bande plate de matériau électriquement conducteur (2) peut avoir une largeur de 10 à 30 mm, disons de 12 à 28 mm, par exemple de 14 à 25 mm.

13. Connecteur (1) selon l'une quelconque des revendications 11 ou 12, où le matériau non-conducteur (3) définit une couche de marge (3C), de chaque côté du matériau conducteur (2), pour ainsi garantir un solide enrobage du matériau conducteur (2) et où la couche de marge (3C) peut être de 0,25 à 4 mm de large, disons de 0,5 à 3 et de préférence de 0,75 à 2,5 mm de large.

14. Connecteur (1) selon l'une quelconque des revendications 11 à 13, où l'adhésif (4) est de 5 à 35 mm de long, disons de 20 à 30 mm de long, par exemple de 21 à 29, 22 à 28, disons 23 à 27, disons 24 à 26 mm de long.

15. Connecteur (1) selon l'une quelconque des revendications 11 à 14, où l'adhésif (4) est situé à l'écart de l'extrémité du matériau non-conducteur (3), disons de 0,1 à 20 mm par rapport à l'extrémité, disons de 0,5 à 15 mm par rapport à l'extrémité, disons de 1 à 10 mm par rapport à l'extrémité du matériau non-conducteur (3).
